# EUROPEAN PATENT APPLICATION

(11) **EP 4 477 480 A1**
(43) Date of publication of application: **18.12.2024**
(21) Application number: 22947327.7
(22) Date of filing: 23.06.2022
(51) Int. Cl.: B60R 22/18, B60R 22/48, A44B 11/25

(54) **LOCK CATCH AND VEHICLE**

(71) Applicant: Zhejiang Geely Holding Group Co., Ltd., Hangzhou, Zhejiang 310000 (CN); Geely Automotive Research Institute (Ningbo) Co., Ltd., Hangzhou Bay New District Ningbo, Zhejiang 315336 (CN)
(72) Inventor: CAO, Yinwei, Hangzhou, Zhejiang 310000 (CN); ZHU, Liren, Hangzhou, Zhejiang 310000 (CN); ZHANG, Yingxi, Hangzhou, Zhejiang 310000 (CN); GAO, Lei, Hangzhou, Zhejiang 310000 (CN); XIE, Shuke, Hangzhou, Zhejiang 310000 (CN); WANG, Changjun, Hangzhou, Zhejiang 310000 (CN); WANG, Pengxiang, Hangzhou, Zhejiang 310000 (CN)
(74) Representative: Osterhoff, Utz
(86) International application number: PCT/CN2022/100820
(87) International publication number: WO 2023/245556

(57) **Abstract**

Disclosed are a lock catch and a vehicle. The lock catch includes: a base seat, a buckle, a buckle return spring, a transmission member and a button. The base seat is provided with an inserting groove extending in a first direction, the inserting groove is configured for a locking tongue to be inserted in the first direction, and the locking tongue is provided with a buckle hole; the buckle is corresponding to the inserting groove, the buckle is rotatably connected to the base seat to have a first state and a second state, the buckle is provided with a buckle portion configured to be buckled with the buckle hole, and the buckle portion is further configured to be abutted against the locking tongue; in the first state, the buckle portion is configured to extend into the inserting groove; and in the second state, the buckle portion is outside the inserting groove; the buckle return spring is provided between the buckle and the base seat, and the buckle return spring is configured to drive the buckle to switch from the second state to the first state; the transmission member is connected to the buckle, and the transmission member includes two transmission portions provided on both sides of the buckle along a rotation direction of the buckle; and the button is provided with two abutting surfaces respectively towards the two transmission portions, one of the abutting surfaces is configured to be abutted against one of the transmission portions, and the button is configured to drive the buckle from the first state to the second state along the first direction through the transmission member.

## Description

### TECHNICAL FIELD

The present application relates to the technical field of vehicles, and in particular to a lock catch and a vehicle.

### BACKGROUND

The vehicle includes a lock catch, a locking tongue buckled with the lock catch, and a safety belt connected to the locking tongue. To ensure the safety of the passenger, the passenger needs to wear the safety belt during the driving of the vehicle, that is, the locking tongue is buckled with the lock catch. However, the unlocking process of the lock catch in the exemplary structure is not smooth enough.

### SUMMARY

The purpose of the present application is to provide a lock catch, aiming to improve the smoothness of the unlocking process of the lock catch.

### Technical solution

To achieve the above purpose, the lock catch provided in the present application includes:
a base seat provided with an inserting groove extending in a first direction, the inserting groove is configured for a locking tongue to be inserted in the first direction, and the locking tongue is provided with a buckle hole;
a buckle corresponding to the inserting groove, the buckle is rotatably connected to the base seat to have a first state and a second state, the buckle is provided with a buckle portion configured to be buckled with the buckle hole, and the buckle portion is further configured to be abutted against the locking tongue; in the first state, the buckle portion is configured to extend into the inserting groove; and in the second state, the buckle portion is outside the inserting groove, and the locking tongue is abutted against the buckle to switch the buckle from the first state to the second state;
a buckle return spring provided between the buckle and the base seat, the buckle return spring is configured to drive the buckle to switch from the second state to the first state;
a transmission member connected to the buckle, the transmission member includes two transmission portions provided on both sides of the buckle along a rotation direction of the buckle; and
a button movably provided on the base seat, the button is provided with two abutting surfaces respectively towards the two transmission portions, one of the abutting surfaces is configured to be abutted against one of the transmission portions, and the button is configured to drive the buckle from the first state to the second state along the first direction through the transmission member.

In an embodiment, the abutting surface is recessed in a direction away from the corresponding transmission portion, and a normal direction where the abutting surface is abutted against the corresponding transmission portion during the process of the abutting surface abutting against the corresponding transmission portion is a tangent direction of a rotation of the transmission member around a rotating shaft.

In an embodiment, the lock catch further includes: a transmission spring provided between the buckle and the button, and the button is also indirectly abutted against the buckle by pressing the transmission spring along the first direction.

In an embodiment, the lock catch further includes: a rotating shaft corresponding to the inserting groove, and the buckle is rotatably connected to the base seat through the rotating shaft, the transmission spring includes a first torsion spring, the first torsion spring includes a first spring body sleeved on the rotating shaft, and a first torsion arm and a second torsion arm respectively connected to both ends of the first spring body, the first torsion arm is connected to the base seat, the second torsion arm is abutted against one side of the buckle close to the button, the second torsion arm is bent from the buckle towards the button, and the button is configured to press the second torsion arm along the first direction.

In an embodiment, two first torsion springs are provided on both sides of the buckle in an extending direction of the rotating shaft, and two second torsion arms are connected to each other as a whole.

In an embodiment, the lock catch further includes: a rotating shaft corresponding to the inserting groove, and the buckle is rotatably connected to the base seat through the rotating shaft, the buckle return spring includes a second torsion spring, the second torsion spring includes a second spring body sleeved on the rotating shaft, and a third torsion arm and a fourth torsion arm respectively connected to both ends of the second spring body, the third torsion arm is connected to the base seat, and the fourth torsion arm is abutted against one side of the buckle away from the button.

In an embodiment, two second torsion springs are respectively provided on both sides of the buckle in an extending direction of the rotating shaft, and two fourth torsion arms are connected to each other as a whole.

In an embodiment, a limiting groove configured to be engaged with the fourth torsion arm is provided on the side of the buckle away from the button.

In an embodiment, the lock catch further includes: a locking tongue return spring configured for the locking tongue to press along the first direction, and the locking tongue return spring is provided in the inserting groove.

In an embodiment, the locking tongue return spring is configured as a spring sheet, the locking tongue return spring is configured to protrude in a direction opposite to the first direction, and both ends of the locking tongue return spring are connected to the base seat.

In an embodiment, the lock catch further includes:
a circuit box, and
the circuit box includes a box body configured to be electrically connected to an indicator light, and a triggering member elastically connected to the box body; the triggering member is configured to be abutted against the locking tongue, and the circuit box has a conductive state and an off state; in the conductive state, the triggering member is configured to extend into the inserting groove, and the box body and the indicator light are conductive; in the off state, the triggering member is outside the inserting groove, the box body is disconnected from the indicator light, the locking tongue is abutted against the circuit box to switch from the conductive state to the off state, and in response to that the circuit box is in the off state, the buckle is in the first state.

In an embodiment, the triggering member includes a contact point elastically retracted on the box body and an elastic sheet connected to the box body, the elastic sheet is provided obliquely along the first direction in a direction of the box body close to the inserting groove, the contact point is provided between the box body and the elastic sheet, the elastic sheet is configured to press the contact point, and the elastic sheet is configured to be pressed by the locking tongue; in the conductive state, the elastic sheet is configured to extend into the inserting groove, and the elastic sheet is abutted against the contact point; and in the off state, the elastic sheet is outside the inserting groove, the elastic sheet is abutted against the contact point, and the locking tongue is abutted against the elastic sheet to switch the circuit box from the conductive state to the off state.

In an embodiment, the button is configured as a light-transmitting member, the lock catch further includes a light source, and the button and the light source are provided in sequence in a pressing direction of the button.

In an embodiment, a logo layer is provided on one side of the button away from the light source.

In an embodiment, the lock catch further includes: a light-transmitting protective shell covered on the logo layer.

In an embodiment, the light source is fixed to the button.

In an embodiment, the lock catch further includes: a light guiding member, and
the light source is fixed to the button through the light guiding member.

The present application also provides a vehicle, including the lock catch.

In the technical solution of the present application, the locking tongue can be inserted into the inserting groove along the first direction. During the insertion process, the locking tongue is abutted against the buckle portion of the buckle located in the first state, that is, abutted against the buckle portion located in the inserting groove. The buckle portion rotates around the rotating axis of the buckle, so that the buckle portion moves to the outside of the inserting groove, thereby switching the buckle to the second state. Then the locking tongue continues to move along the first direction. At this time, the buckle has a tendency to switch from the second state to the first state under the action of the buckle return spring. Under the action of the buckle return spring, the buckle makes the buckle portion press against the surface of the locking tongue and slide relatively. Until the buckle portion is corresponding to the buckle hole of the locking tongue, the buckle makes the buckle portion extend into the buckle hole and buckled with the buckle hole under the action of the buckle return spring. It can be understood that at this time, the buckle portion extends into the inserting groove, and the buckle switches from the second state to the first state under the action of the buckle return spring, so that the lock catch is buckled with the locking tongue, and the passenger finishes wearing the safety belt. When the passenger wants to unlock the safety belt, he can press the button so that the abutting surface of the button is abutted against the transmission portion to drive the buckle to rotate. Since the transmission portion is provided on both sides of the buckle in the extension direction of the rotating shaft, the buckle can smoothly switch from the first state to the second state when the two abutting surfaces are respectively abutted against the two transmission portions, thereby improving the smoothness of the unlocking process of the lock catch. In the second state, the buckle portion is located outside the inserting groove, so that the lock catch is unlocked, and the locking tongue can be separated from the inserting groove without the action of the buckle portion. It can be understood that after releasing the button, the buckle return spring will drive the buckle to switch from the second state to the first state, so that the locking tongue can be inserted into the inserting groove again and the locking tongue can be buckled with the buckle portion again.

### BRIEF DESCRIPTION OF THE DRAWINGS

In order to illustrate the technical solutions in the embodiments of the present application or in the related art more clearly, the following briefly introduces the accompanying drawings required for the description of the embodiments or the related art. Obviously, the drawings in the following description are only part of embodiments of the present application. For those skilled in the art, other drawings can also be obtained according to the structures shown in these drawings without any creative effort.
FIG. 1 is a schematic structural view of a lock catch buckled with a locking tongue according to an embodiment of the present application.
FIG. 2 is an exploded view of the lock catch and the locking tongue in FIG. 1.
FIG. 3 is a top view of a base seat, a locking tongue return spring, a circuit box, a buckle, a transmission spring, a buckle return spring, a rotating shaft, a transmission member, a button, and a protective shell in FIG. 2.
FIG. 4 is a cross-sectional view along B-B in FIG. 3.
FIG. 5 is a schematic cooperative structural view of the base seat, the buckle, the transmission spring, the buckle return spring, the rotating shaft, and the transmission member in FIG. 2.
FIG. 6 is a schematic structural view of a button in FIG. 2.
FIG. 7 is a schematic cooperative structural view of the buckle, the rotating shaft, and the transmission member in FIG. 2.
FIG. 8 is a schematic structural view of the transmission spring in FIG. 2.
FIG. 9 is a schematic structural view of the buckle return spring in FIG. 2.
FIG. 10 is a schematic cooperative structural view of the base seat and the locking tongue return spring in FIG. 2.
FIG. 11 is a schematic cooperative structural view of the base seat and the circuit box in FIG. 2.

### Description of reference signs :

| Reference sign | Name | Reference sign | Name |
|---|---|---|---|
| 100 | lock catch | 520 | fixing seat |
| 200 | base seat | 600 | transmission spring |
| 200a | inserting groove | 610 | first torsion spring |
| 220b | avoiding groove | 611 | first spring body |
| 300 | buckle | 612 | first torsion arm |
| 300a | limiting groove | 613 | second torsion arm |
| 300b | buckle portion | 700 | locking tongue return spring |
| 310 | rotating shaft | 800 | circuit box |
| 320 | transmission member | 810 | box body |
| 320a | transmission portion | 820 | triggering member |
| 400 | buckle return spring | 821 | elastic sheet |
| 410 | second torsion spring | 822 | contact point |
| 411 | second spring body | 910 | light source |
| 412 | third torsion arm | 920 | logo layer |
| 413 | fourth torsion arm | 930 | protective shell |
| 413a | first section | 940 | light guiding member |
| 413b | second section | 950 | locking tongue |
| 500 | button | 950a | buckle hole |
| 500a | abutting surface | 960 | casing |
| 510 | button return spring | | |

The realization of the objective, functional characteristics, and advantages of the present application are further described with reference to the accompanying drawings.

### DETAILED DESCRIPTION OF THE EMBODIMENTS

The technical solutions of the embodiments of the present application will be described in more detail below with reference to the accompanying drawings. It is obvious that the embodiments to be described are only some rather than all of the embodiments of the present application. All other embodiments obtained by those skilled in the art based on the embodiments of the present application without creative efforts shall fall within the scope of the present application.

It should be noted that all directional indications (such as up, down, left, right, front, back, etc.) in the embodiments of the present application are only used to explain the relative positional relationship, the movement situation, etc. If the specific posture changes, the directional indication also changes accordingly.

In the present application, unless otherwise specified and limited, the terms "connecting" and "fixing" should be understood in a broad sense, for example, it can be a fixed connection, a detachable connection, integrally connected, mechanically connected, electrically connected, directly connected or indirectly connected through an intermediary, and it can be the internal connectivity of two components or the interaction between two components, unless otherwise limited. Those skilled in the art can understand the specific meanings of the above terms in the present application according to specific situations.

In addition, the descriptions of "first", "second", etc. are only for the purpose of description, and should not be construed as indicating or implying relative importance or implicitly indicates the number of technical features indicated. Thus, a feature delimited with "first", "second" may expressly or implicitly include at least one of that feature. In addition, the meaning of "and/or" in the present application includes three parallel schemes, taking "A and/or B" as an example, including scheme A, or scheme B, or scheme A and B at the same time. In addition, the technical solutions between the various embodiments can be combined with each other, but must be based on the realization by those skilled in the art. When the combination of technical solutions is contradictory or cannot be realized, it should be considered that the combination of such technical solutions does not exist or fall within the scope of protection claimed in the present application.

The vehicle includes a lock catch, a locking tongue buckled with the lock catch, and a safety belt connected to the locking tongue. To ensure the safety of the passenger, the passenger needs to wear the safety belt during the driving of the vehicle, that is, the locking tongue is buckled with the lock catch. However, the unlocking process of the lock catch in the exemplary structure is not smooth enough. Therefore, the present application provides a lock catch, improving the smoothness of the unlocking process of the lock catch.

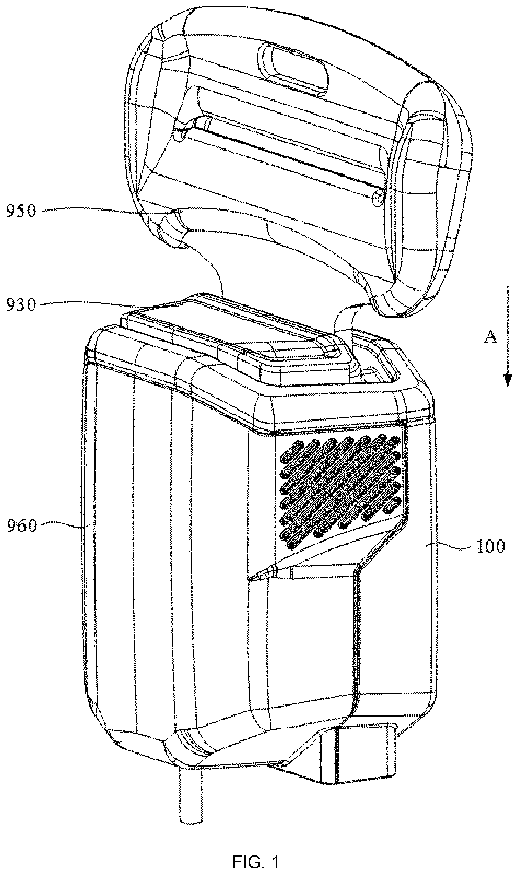

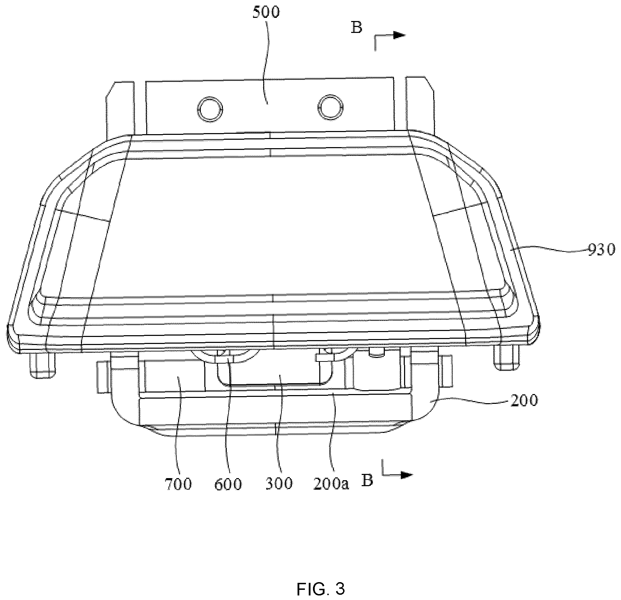

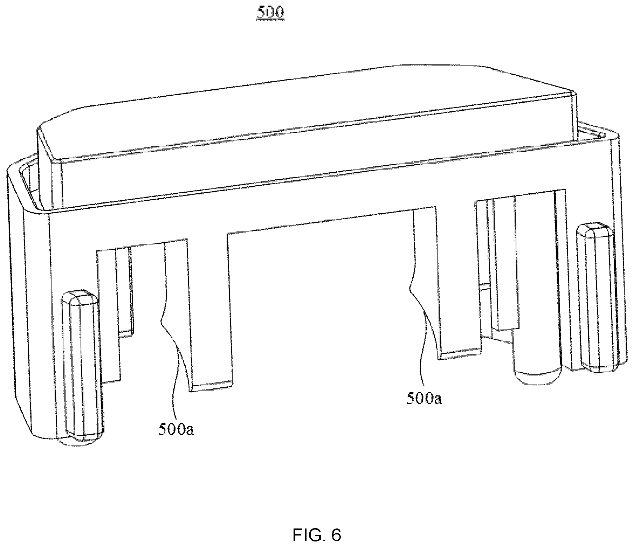

Referring to FIG. 1 to 7, in an embodiment of the present application, the lock catch 100 includes: a base seat 200, a buckle 300, a buckle return spring 400, a transmission member 320 and button 500.

The base seat 200 is provided with an inserting groove 200a extending along a first direction, the inserting groove 200a is configured for the locking tongue 950 to be inserted along the first direction, and the locking tongue 950 is provided with a buckle hole 950a.

The buckle 300 is provided corresponding to the inserting groove 200a, the buckle 300 is rotatably connected to the base seat 200 to have a first state and a second state, the buckle 300 is provided with a buckle portion 300b configured to be buckled with the buckle hole 950a, the buckle portion 300b is also configured to be abutted against the locking tongue 950. When in the first state, the buckle portion 300b extends into the inserting groove 200a; when in the second state, the buckle portion 300b is outside the inserting groove 200a, and the locking tongue 950 can be abutted against the buckle 300 to switch from the first state to the second state.

The buckle return spring 400 is provided between the buckle 300 and the base seat 200, the buckle return spring 400 is configured to drive the buckle 300 to switch from the second state to the first state.

The transmission member 320 is connected to the buckle 300, the transmission member 320 includes two transmission portions 320a provided on both sides of the buckle 300 along the rotation direction of the buckle 300.

The button 500 is movably provided on the base seat 200, the button 500 is provided with two abutting surfaces 500a respectively towards the two transmission portions 320a, one of the abutting surfaces 500a is correspondingly configured to be abutted against one of the transmission portions 320a, the button 500 can drive the buckle 300 to switch from the first state to the second state via the transmission member 320 in the first direction.

In the technical solution of the present application, the locking tongue 950 can be inserted into the inserting groove 200a along the first direction. During the insertion process, the locking tongue 950 is abutted against the buckle portion 300b of the buckle 300 in the first state, that is, abutted against the buckle portion 300b located in the inserting groove 200a. The buckle portion 300b rotates around the rotating axis of the buckle 300, so that the buckle portion 300b moves to the outside of the inserting groove 200a, and the buckle 300 is switched to the second state. Then the locking tongue 950 continues to move along the first direction. At this time, the buckle 300 has a tendency to switch from the second state to the first state under the action of the buckle return spring 400. The buckle 300 makes the buckle portion 300b press against the surface of the locking tongue 950 and slide relatively under the action of the buckle return spring 400. Until the buckle portion 300b is corresponding to the buckle hole 950a of the locking tongue 950, the buckle 300 makes the buckle portion 300b extend into the buckle hole 950a and buckled with the buckle hole 950a under the action of the buckle return spring 400. It can be understood that at this time, the buckle portion 300b extends into the inserting groove 200a, and the buckle 300 is switched from the second state to the first state under the action of the buckle return spring 400, so that the lock catch 100 is buckled with the locking tongue 950, and the passenger completes wearing the safety belt. When the passenger wants to unlock the safety belt, the button 500 can be pressed to make the abutting surface 500a of the button 500 be abutted against the transmission portion 320a, thereby driving the buckle 300 to rotate. Since the transmission portion 320a is provided on both sides of the buckle 300 in the extending direction of the rotating shaft 310, when the two abutting surfaces 500a are respectively abutted against the two transmission portions 320a, the buckle 300 can smoothly switch from the first state to the second state, thereby improving the smoothness of the unlocking process of the lock catch 100. In the second state, the buckle portion 300b is located outside the inserting groove 200a, so that the lock catch 100 is unlocked, and the locking tongue 950 can be separated from the inserting groove 200a without the buckle portion 300b. It can be understood that when the button 500 is released, the buckle return spring 400 will drive the buckle 300 to switch from the second state to the first state to prepare for the locking tongue 950 to be inserted into the inserting groove 200a again, and the locking tongue 950 can be buckled with the buckle portion 300b again.

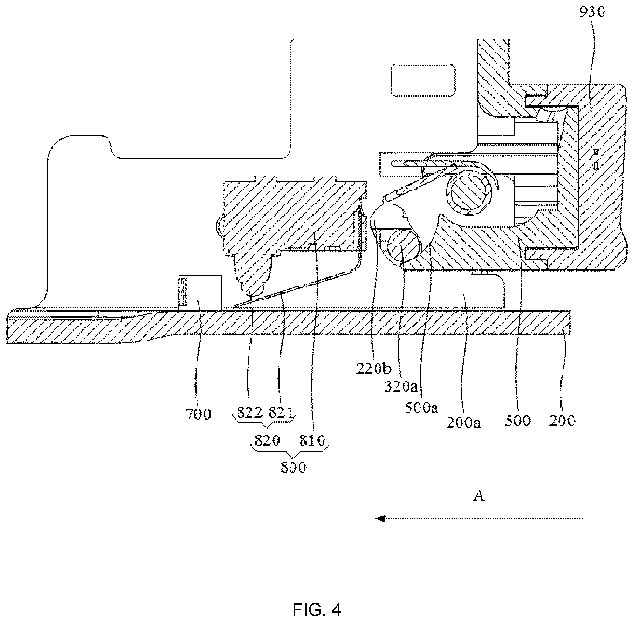

It should be noted that the first direction is the A direction indicated in FIG. 1 and FIG. 4. In addition, in an embodiment, the buckle 300 and the transmission member 320 are separate components. The transmission member 320 is penetrated in the buckle 300, and exceeds the two sides of the buckle 300 in the extending direction of the rotating shaft 310. The two exceeding parts are two transmission portions 320a respectively. Separately manufacturing the transmission member 320 and the buckle 300 is conducive to reducing the difficulty of manufacturing the buckle 300 and the transmission seat as a whole. In another embodiment, in order to improve the structural strength of the buckle and the transmission member as a whole, the transmission member is connected to the buckle as a whole.

In addition, in an embodiment, the lock catch 100 also includes a casing 960 covered on the base seat 200, and the casing 960 includes a plurality of detachable sub-casings.

In order to make the process of pressing the button 500 less laborious for the passenger, in an embodiment, the abutting surface 500a is recessed in a direction away from the corresponding transmission portion 320a, and the normal direction of the contact point between the abutting surface 500a and the corresponding transmission portion 320a when the abutting surface 500a is abutted against the corresponding transmission portion 320a is the tangent direction of the rotation of the transmission member 320 around the rotating shaft 310. In this way, the force required for the passenger to press the button 500 to drive the buckle 300 to switch from the first state to the second state is relatively small, which is convenient for the user to make the lock catch 100 buckle with the buckle 300. In another embodiment, in order to simplify the structure of the button, the abutting surface can be inclined in the first direction along the direction close to the inserting groove, and the abutting surface is a flat plane.

It can be understood that if the button 500 is pressed at a position closer to one of the transmission portions 320a in the axial direction of the rotating shaft 310, the other transmission portion 320a will be subjected to less force, and it is even possible that the abutting surface 500a does not abut against the corresponding transmission portion 320a, so that the transmission portion 320a is not subjected to force, which will cause the buckle 300 to rotate less smoothly. Therefore, in an embodiment, the lock catch 100 further includes a transmission spring 600 provided between the buckle 300 and the button 500, and the button 500 is also indirectly abutted against the buckle 300 by pressing the transmission spring 600 along the first direction. In this way, the button 500 can also indirectly transmit force to the buckle 300 through the transmission spring 600, so that the combined force from the button 500 on the buckle 300 is as close to the midpoint between the two transmission portions 320a as possible. No matter which transmission portion 320a the button 500 is close to in the axial direction of the rotating shaft 310, the button 500 can drive the buckle 300 to rotate relatively smoothly. It is worth mentioning that the transmission spring 600 has a certain amount of expansion and contraction, so that the button 500 will not press the transmission spring 600 because the pressing point of the button 500 is far away from the transmission spring 600. In addition, after the passenger releases the button 500, the transmission spring 600 can also release the elastic potential energy to promote the reset of the button 500. In another embodiment, the transmission spring can be replaced by an elastic member, such as a rubber member.

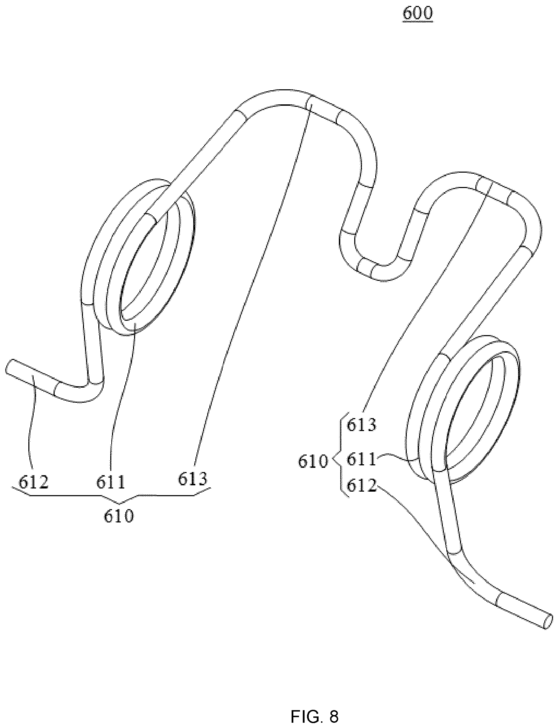

Referring to FIG. 8, there are various specific structures of the transmission spring 600. For example, in an embodiment, the lock catch 100 further includes a rotating shaft 310 corresponding to the inserting groove 200a, and the buckle 300 is rotatably connected to the base seat 200 via the rotating shaft 310. The transmission spring 600 includes a first torsion spring 610, and the first torsion spring 610 includes a first spring body 611 sleeved on the rotating shaft 310, and a first torsion arm 612 and a second torsion arm 613 respectively connected to both ends of the first spring body 611. The first torsion arm 612 is connected to the base seat 200, the second torsion arm 613 is abutted against a side of the buckle 300 close to the button 500, the second torsion arm 613 is bent from the buckle 300 towards the button 500, and the button 500 is configured for pressing the second torsion arm 613 along the first direction. In this way, the first torsion spring 610, the rotating shaft 310, and the buckle 300 cooperate with each other in a simple and easy manner. In addition to rotating the buckle 300 relative to the base seat 200, the rotating shaft 310 also cooperates with the first spring body 611 to prevent the first spring body 611 from being separated from the rotating shaft 310 and causing the second torsion arm 613 to be separated from the buckle 300. In another embodiment, the transmission spring can also be configured as a pressing spring. In order to prevent the pressing spring from moving when the button is pressed, and a guide column is provided on the side of the buckle close to the button for the pressing spring to be sleeved. In another embodiment, the transmission spring can also be configured as a spring sheet, and the transmission spring is bent towards the button.

In an embodiment, two first torsion springs 610 are provided, and the two first torsion springs 610 are provided on both sides of the buckle 300 in the extending direction of the rotating shaft 310. The two second torsion arms 613 are connected to each other as a whole. By arranging the two first torsion springs 610 on both sides of the buckle 300, the buckle 300 can be more evenly stressed when the button 500 is abutted against the buckle 300 by the transmission spring 600, and the second torsion arms 613 are connected to each other as a whole, which can prevent the second torsion arm 613 from being overly stressed and causing the second torsion arm 613 to be excessively deformed and loosened, thereby extending the service life of the transmission spring 600.

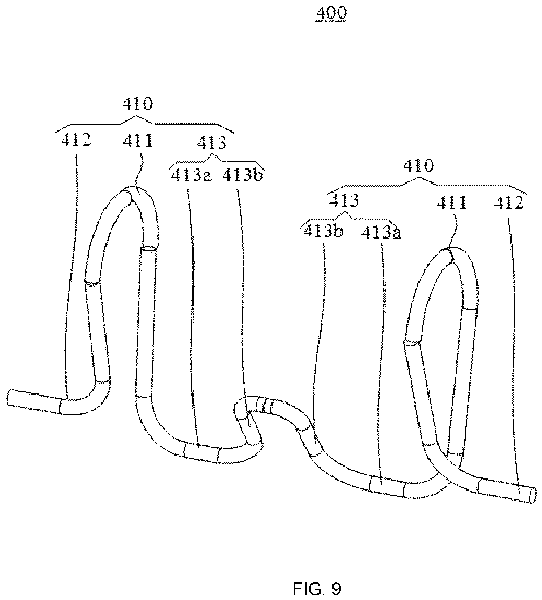

Referring to FIG. 9, there are various structures of the buckle return spring 400. For example, in an embodiment, the lock catch 100 further includes a rotating shaft 310 corresponding to the inserting groove 200a, the buckle 300 is rotatably connected to the base seat 200 via the rotating shaft 310, the buckle return spring 400 includes a second torsion spring 410, the second torsion spring 410 includes a second spring body 411 sleeved on the rotating shaft 310, and a third torsion arm 412 and a fourth torsion arm 413 respectively connected to both ends of the second spring body 411. The third torsion arm 412 is connected to the base seat 200, and the fourth torsion arm 413 is abutted against a side of the buckle 300 away from the button 500. Thus, the cooperation between the second torsion spring 410, the rotating shaft 310, and the buckle 300 is simple and easy to realize. In addition to making the buckle 300 rotate relative to the base seat 200, the rotating shaft 310 also cooperates with the second spring body 411 to prevent the second spring body 411 from being separated from the rotating shaft 310 and causing the fourth torsion arm 413 to be separated from the buckle 300. In another embodiment, the transmission spring can also be configured as a pressing spring. One end of the transmission spring is connected to the side of the buckle away from the button, and the other end of the transmission spring is connected to the base seat, as long as the transmission spring can drive the buckle to switch from the second state to the first state. In another embodiment, the transmission spring can also be configured as a tension spring. One end of the transmission spring is connected to the side of the buckle close to the button, and the other end of the transmission spring is connected to the base seat, as long as the transmission spring can drive the buckle to switch from the second state to the first state.

In an embodiment, two second torsion springs 410 are provided, and the two second torsion springs 410 are provided on both sides of the buckle 300 in the extending direction of the rotating shaft 310, and the two fourth torsion arms 413 are connected to each other as a whole. By arranging the two second torsion springs 410 on both sides of the buckle 300, the buckle 300 can be subjected to a more uniform force when the button 500 is abutted against the buckle 300 by the buckle return spring 400, and the fourth torsion arms 413 are connected to each other as a whole, which can prevent the fourth torsion arm 413 from being subjected to excessive force and causing the fourth torsion arm 413 to be excessively deformed and loosened, thereby extending the service life of the buckle return spring 400.

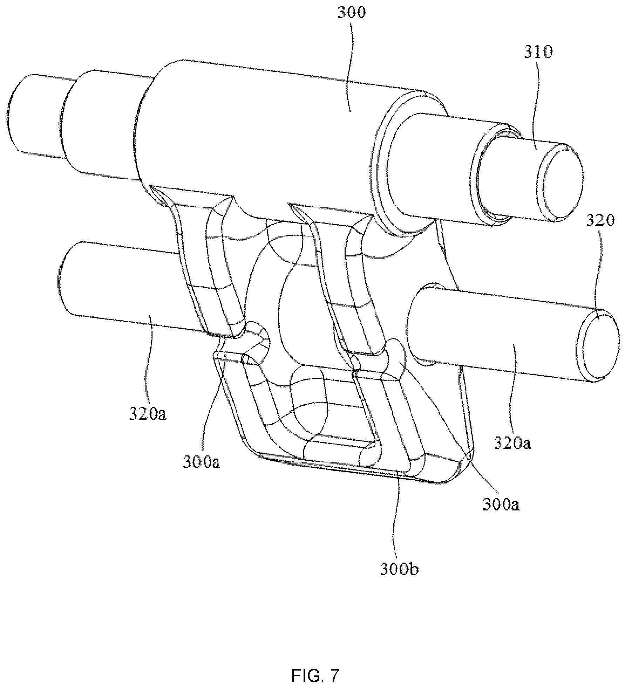

Referring to FIG. 7, in an embodiment, a limiting groove 300a configured for the fourth torsion arm 413 to engage is provided on a side of the buckle 300 away from the button 500, further preventing the fourth torsion arm 413 from being separated from the buckle 300. In another embodiment, the buckle is provided with a limiting hole for the fourth torsion arm to pass through.

Referring to FIG. 9, in an embodiment, the extending direction of the limiting groove 300a is parallel to the extending direction of the rotating shaft 310, and the fourth torsion arm 413 includes a first section 413a engaged with the limiting groove 300a, and a second section 413b connected to the first section 413a at an angle. The second section 413b extends along the groove width direction of the limiting groove 300a, and the second end limits the movement of the second torsion spring 410 along the rotating shaft 310.

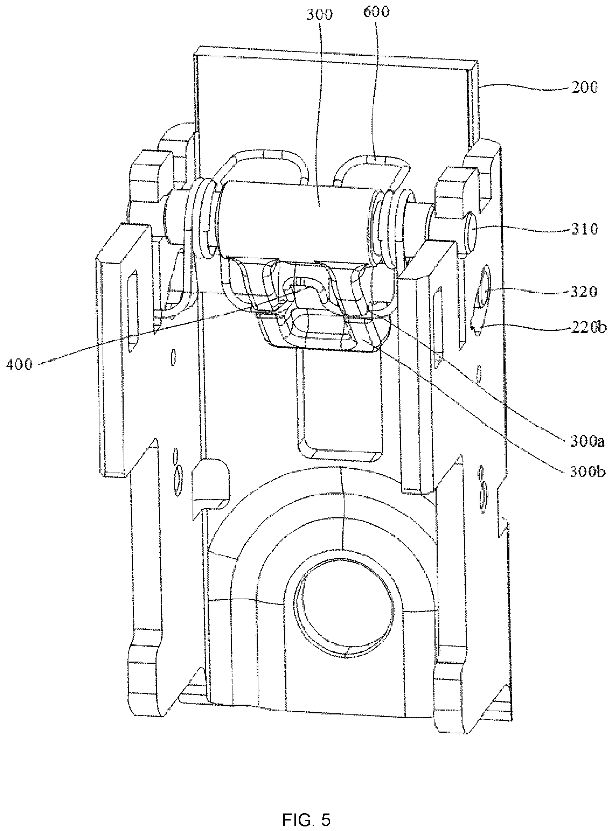

Referring to FIG. 5, in an embodiment, the base seat 200 is provided with two avoiding grooves 220b for the two transmission portions 320a to pass through respectively, so as to prevent the transmission portions 320a from interfering with the base seat 200 when rotating around the rotating shaft 310.

In order to facilitate the button 500 to return to its original position, in an embodiment, the lock catch 100 further includes a locking tongue return spring 510. The locking tongue return spring 510 is provided between the base seat 200 and the button 500, and is configured for pressing the button 500 along the first direction. In addition, in an embodiment, the lock catch 100 further includes a fixing seat 520 connected to the base seat 200, the locking tongue return spring 510 is connected to the base seat 200 through the fixing seat 520, and the fixing seat 520 provides support for the locking tongue return spring 510.

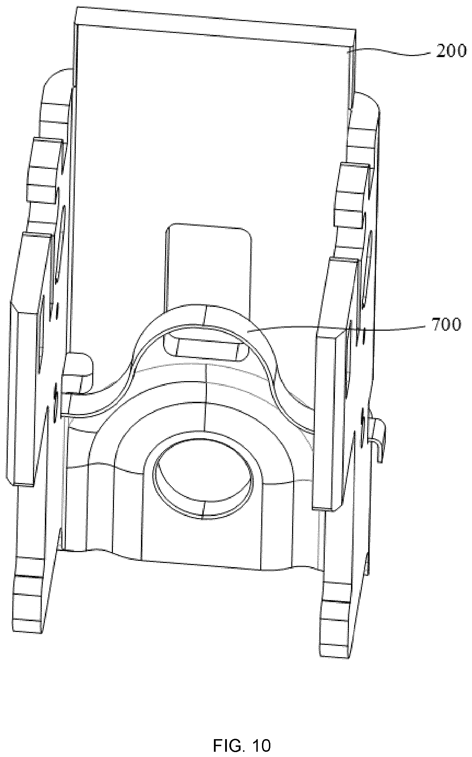

Referring to FIG. 10, in an embodiment, the lock catch 100 further includes a locking tongue return spring 700 configured for the locking tongue 950 to press along the first direction, and the locking tongue return spring 700 is provided in the inserting groove 200a. When the locking tongue 950 is inserted into the inserting groove 200a and presses the locking tongue return spring 700, the locking tongue return spring 700 has elastic potential energy to drive the locking tongue 950 to withdraw from the inserting groove 200a. When the buckle portion 300b is released from the buckle hole 950a buckled with the locking tongue 950, the locking tongue 950 moves in a direction opposite to the first direction under the action of the locking tongue return spring 700, so that the user can pull the locking tongue 950 out of the lock catch 100.

There are many structures of the locking tongue return spring 700. For example, in an embodiment, the locking tongue return spring 700 is configured as a spring sheet. The locking tongue return spring 700 protrudes in a direction opposite to the first direction, and both ends of the locking tongue return spring 700 are connected to the base seat 200. In another embodiment, the locking tongue return spring is configured as a pressing spring extending along the first direction.

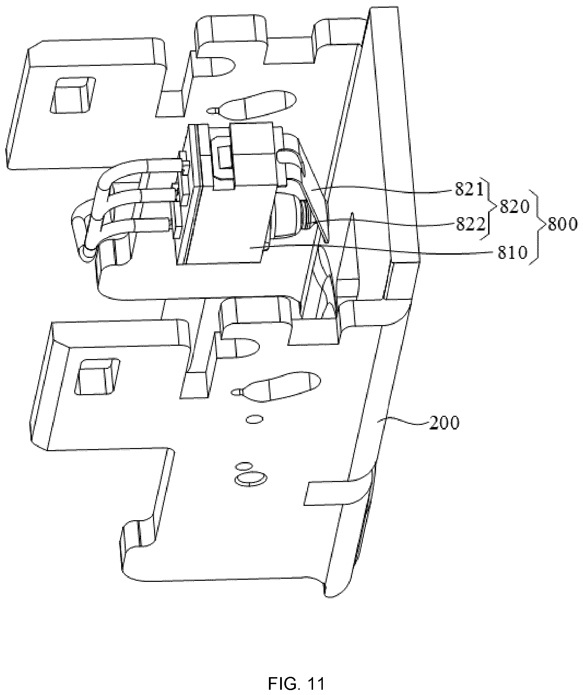

Referring to FIG. 4 and FIG. 11, in order to facilitate the driver of the vehicle to know whether the passenger has fastened the safety belt by buckling the locking tongue 950 with the lock catch 100, in an embodiment, the lock catch 100 further includes a circuit box 800. The circuit box 800 includes a box body 810 configured to be electrically connected to an indicator light, and a triggering member 820 elastically connected to the box body 810. The triggering member 820 is configured for the locking tongue 950 to abut against. The circuit box 800 has a conductive state and an off state. In the conductive state, the triggering member 820 extends into the inserting groove 200a, and the box body 810 is conductive with the indicator light; in the off state, the triggering member 820 is outside the inserting groove 200a, the box body 810 is disconnected from the indicator light, and the locking tongue 950 can abut against the circuit box 800 to switch from the conductive state to the off state. When the circuit box 800 is in the off state, the buckle 300 is in the first state. It can be understood that before the locking tongue 950 is inserted into the inserting groove 200a, the circuit box 800 is in the conductive state, and the indicator light is on, thereby reminding the driver that a passenger has not fastened the safety belt. During the insertion process, the locking tongue 950 is abutted against the triggering member 820 of the circuit box 80 in the conductive state, and the triggering member 820 moves to the outside of the inserting groove 200a, so that the circuit box 800 is switched to the off state. When the circuit box 800 is in the off state, the buckle 300 is in the first state, that is, the buckle portion 300 is buckled with the buckle hole 950a of the locking tongue 950, and the indicator light is off, indicating that the passenger has fastened the safety belt. Since the triggering member 820 is elastically connected to the box body 810, the circuit box 800 has a tendency to switch from the off state to the conductive state, and the triggering member 820 presses the locking tongue 950 without entering the inserting groove 200a, which ensures that the indicator light is off, so that the driver can judge whether the indicator light is on to know whether the passenger has fastened the safety belt. It is worth mentioning that the indicator light can be set on the dashboard of the vehicle for the driver to watch, and of course the indicator light can also be set on the display.

In an embodiment, the triggering member 820 includes a contact point 822 elastically retracted from the box body 810, and an elastic sheet 821 connected to the box body 810. The elastic sheet 821 is tilted along the first direction in the direction in which the box body 810 is close to the inserting groove 200a, and the contact point 822 is provided between the box body 810 and the elastic sheet 821. The elastic sheet 821 is configured for pressing the contact point 822, and the elastic sheet 821 is configured to be pressed by the locking tongue 950. In the conductive state, the elastic sheet 821 extends into the inserting groove 200a, and the elastic sheet 821 is abutted against the contact point 822; in the off state, the elastic sheet 821 is located outside the inserting groove 200a, the elastic sheet 821 is abutted against the contact point 822, and the locking tongue 950 can be abutted against the elastic sheet 821 to switch the circuit box 800 from the conductive state to the off state. In this way, the elastic sheet 821 shares the force of the locking tongue 950 acting on the contact point 822, thereby protecting the contact point 822. In another embodiment, the triggering member can be configured only as a contact point, as long as the structural strength of the contact point is high enough.

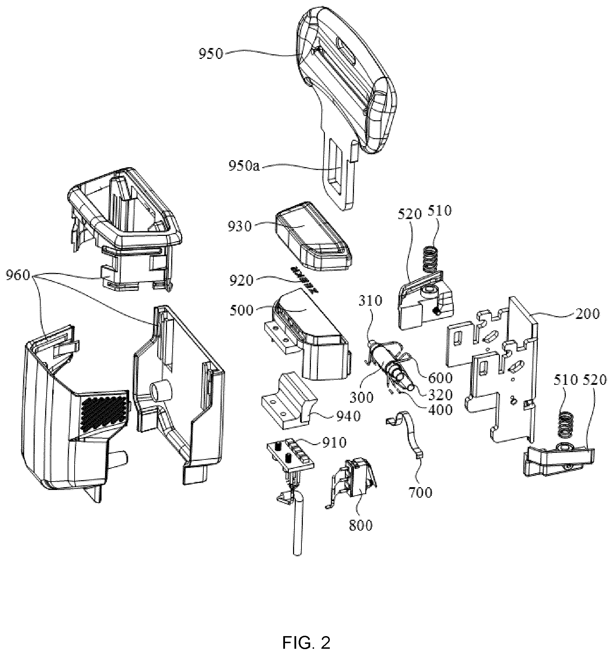

Referring to FIG. 2, in an embodiment, the button 500 is configured as a light-transmitting member. The lock catch 100 further includes a light source 910, and the button 500 and the light source 910 are provided in sequence in the pressing direction of the button 500. The button 500 does not block the light emitted by the light source 910, and the human eye can see the light emitted by the lock catch 100, so that it is convenient for passengers to find the lock catch 100 in a low-brightness environment, and it is convenient for passengers to buckle the lock catch 100 with the locking tongue 950. In addition, it is also convenient for passengers to find the position of the button 500, so that it is convenient for passengers to press the button 500 to release the buckle between the lock catch 100 and the locking tongue 950.

In an embodiment, the material of the button 500 includes PC material, which has high transparency. In another embodiment, the material of the button includes PP material.

In an embodiment, a logo layer 920 is provided on a side of the button 500 away from the light source 910. Thus, the logo layer 920 is more eye-catching under the illumination of the light source 910. The logo layer 920 can be an image that the user likes to improve the user experience. In addition, the logo layer 920 can also be a brand's logo to improve the brand's popularity.

In an embodiment, the material of the logo layer 920 includes a fluorescent material, so that the logo layer 920 is more eye-catching under the illumination of the light source 910. In another embodiment, the material of the logo layer includes metal, so that the logo will show a metallic luster under the illumination of the light source.

It can be understood that each time the button 500 is pressed, the logo layer 920 may be touched, and the logo layer 920 may be worn. Therefore, in an embodiment, the lock catch 100 further includes a light-transmitting protective shell 930, and the protective shell 930 is covered on the logo layer 920, so that the protective shell 930 avoids the wear of the logo layer 920, and light passing through the light source 910 will not be affected since the protective shell 930 is light-transmitting. In another embodiment, the logo layer can be embedded in the button.

In an embodiment, the light source 910 is fixed to the button 500. In this way, the relative position of the light source 910 and the button 500 will not change, thereby ensuring that the light source 910 can give the logo layer 920 a better display effect during the movement of the button 500. In another embodiment, the button is fixed to the base seat to reduce the force required when the button returns to its original position.

In an embodiment, the lock catch 100 further includes a light guiding member 940, and the light source 910 is fixed to the button 500 through the light guiding member 940. In this way, the light generated by the light source 910 is collected by the light guiding member 940, so that the lock catch 100 appears brighter and more eye-catching, which is more conducive to passengers finding the lock catch 100.

There are many ways to fix the light source 910, the light guiding member 940 and the button 500. In an embodiment, the light source 910, the light guiding member 940, and the button 500 are fixed by screw locking. In another embodiment, the light source, the light guiding member, and the button are snap-fitted. In another embodiment, the light source, the light guiding member, and the button are bonded.

The present application also provides a vehicle, which includes the lock catch 100. The specific structure of the lock catch 100 refers to the above-mentioned embodiment. Since the present vehicle adopts all the technical solutions of all the above-mentioned embodiments, it at least has all the effects brought by the technical solutions of the above-mentioned embodiments, which will not be described here. The vehicle also includes a vehicle body, a safety belt connected to the vehicle body, and a locking tongue 950 connected to the safety belt. The lock catch 100 is connected to the vehicle body. By buckling the locking tongue 950 with the lock catch 100, the safety belt can be fastened to the passenger.

The above embodiments are only part of the present application and do not therefore limit the scope of the present application. Any equivalent structure or equivalent process transformation made by using the contents and drawings of the present application under the inventive concept of the present application, or directly or indirectly used in other relevant technical fields, are included in the scope of the present application.

## Claims

1. A lock catch, **characterized by** comprising:
a base seat provided with an inserting groove extending in a first direction, wherein the inserting groove is configured for a locking tongue to be inserted in the first direction, and the locking tongue is provided with a buckle hole;
a buckle corresponding to the inserting groove, wherein the buckle is rotatably connected to the base seat to have a first state and a second state, the buckle is provided with a buckle portion configured to be buckled with the buckle hole, and the buckle portion is further configured to be abutted against the locking tongue; in the first state, the buckle portion is configured to extend into the inserting groove; and in the second state, the buckle portion is outside the inserting groove, and the locking tongue is abutted against the buckle to switch the buckle from the first state to the second state;
a buckle return spring provided between the buckle and the base seat, wherein the buckle return spring is configured to drive the buckle to switch from the second state to the first state;
a transmission member connected to the buckle, wherein the transmission member comprises two transmission portions provided on both sides of the buckle along a rotation direction of the buckle; and
a button movably provided on the base seat, wherein the button is provided with two abutting surfaces respectively towards the two transmission portions, one of the abutting surfaces is configured to be abutted against one of the transmission portions, and the button is configured to drive the buckle from the first state to the second state along the first direction through the transmission member.

2. The lock catch according to claim 1, wherein the abutting surface is recessed in a direction away from the corresponding transmission portion, and a normal direction where the abutting surface is abutted against the corresponding transmission portion during the process of the abutting surface abutting against the corresponding transmission portion is a tangent direction of a rotation of the transmission member around a rotating shaft.

3. The lock catch according to claim 1, further comprising:
a transmission spring provided between the buckle and the button,
wherein the button is also indirectly abutted against the buckle by pressing the transmission spring along the first direction.

4. The lock catch according to claim 3, further comprising:
a rotating shaft corresponding to the inserting groove,
wherein the buckle is rotatably connected to the base seat through the rotating shaft, the transmission spring comprises a first torsion spring, the first torsion spring comprises a first spring body sleeved on the rotating shaft, and a first torsion arm and a second torsion arm respectively connected to both ends of the first spring body, the first torsion arm is connected to the base seat, the second torsion arm is abutted against one side of the buckle close to the button, the second torsion arm is bent from the buckle towards the button, and the button is configured to press the second torsion arm along the first direction.

5. The lock catch according to claim 4, wherein two first torsion springs are provided on both sides of the buckle in an extending direction of the rotating shaft, and two second torsion arms are connected to each other as a whole.

6. The lock catch according to claim 1, further comprising:
a rotating shaft corresponding to the inserting groove,
wherein the buckle is rotatably connected to the base seat through the rotating shaft, the buckle return spring comprises a second torsion spring, the second torsion spring comprises a second spring body sleeved on the rotating shaft, and a third torsion arm and a fourth torsion arm respectively connected to both ends of the second spring body, the third torsion arm is connected to the base seat, and the fourth torsion arm is abutted against one side of the buckle away from the button.

7. The lock catch according to claim 6, wherein two second torsion springs are respectively provided on both sides of the buckle in an extending direction of the rotating shaft, and two fourth torsion arms are connected to each other as a whole.

8. The lock catch according to claim 7, wherein a limiting groove configured to be engaged with the fourth torsion arm is provided on the side of the buckle away from the button.

9. The lock catch according to claim 1, further comprising:
a locking tongue return spring configured for the locking tongue to press along the first direction,
wherein the locking tongue return spring is provided in the inserting groove.

10. The lock catch according to claim 9, wherein the locking tongue return spring is configured as a spring sheet, the locking tongue return spring is configured to protrude in a direction opposite to the first direction, and both ends of the locking tongue return spring are connected to the base seat.

11. The lock catch according to claim 1, further comprising:
a circuit box,
wherein the circuit box comprises a box body configured to be electrically connected to an indicator light, and a triggering member elastically connected to the box body; the triggering member is configured to be abutted against the locking tongue, and the circuit box has a conductive state and an off state; in the conductive state, the triggering member is configured to extend into the inserting groove, and the box body and the indicator light are conductive; in the off state, the triggering member is outside the inserting groove, the box body is disconnected from the indicator light, the locking tongue is abutted against the circuit box to switch from the conductive state to the off state, and in response to that the circuit box is in the off state, the buckle is in the first state.

12. The lock catch according to claim 11, wherein the triggering member comprises a contact point elastically retracted on the box body and an elastic sheet connected to the box body, the elastic sheet is provided obliquely along the first direction in a direction of the box body close to the inserting groove, the contact point is provided between the box body and the elastic sheet, the elastic sheet is configured to press the contact point, and the elastic sheet is configured to be pressed by the locking tongue; in the conductive state, the elastic sheet is configured to extend into the inserting groove, and the elastic sheet is abutted against the contact point; and in the off state, the elastic sheet is outside the inserting groove, the elastic sheet is abutted against the contact point, and the locking tongue is abutted against the elastic sheet to switch the circuit box from the conductive state to the off state.

13. The lock catch according to claim 1, wherein the button is configured as a light-transmitting member, the lock catch further comprises a light source, and the button and the light source are provided in sequence in a pressing direction of the button.

14. The lock catch according to claim 13, wherein a logo layer is provided on one side of the button away from the light source.

15. The lock catch according to claim 14, further comprising:
a light-transmitting protective shell covered on the logo layer.

16. The lock catch according to claim 14, wherein the light source is fixed to the button.

17. The lock catch according to claim 16, further comprising:
a light guiding member,
wherein the light source is fixed to the button through the light guiding member.

18. A vehicle, **characterized by** comprising the lock catch according to any one of claims 1 to 17.
